# EUROPEAN PATENT APPLICATION

(11) **EP 3 795 804 A1**
(43) Date of publication of application: **24.03.2021**
(21) Application number: 19198523.3
(22) Date of filing: 20.09.2019
(51) Int. Cl.: F01D 11/02

(54) **SEALING ELEMENT FOR A CONTINUOUS FLOW ENGINE AND CORRESPONDING METHOD OF MANUFACTURING**

(71) Applicant: Siemens Aktiengesellschaft, 80333 München (DE)
(72) Inventor: Thomasson, Lars, 616 33 Åby (SE)

(57) **Abstract**

A sealing element (1) adapted to be used in a continuous flow engine, preferably a steam turbine, contains at least one sealing part (2) and at least one spring part (3) , wherein the at least one spring part (3) is inseparably connected to the sealing element (1). A method of manufacturing such sealing element (1), wherein the sealing element (1) contains a core part (4) located between the at least one sealing part (2) and the at least one spring part (3), contains the step of manufacturing a unit containing the at least one spring part (3) and at least a part of the core part (4) using additive manufacturing.

## Description

The present invention refers to a sealing element to be used in a continuous flow engine. Additionally, the present invention refers to a method of manufacturing such sealing element. Furthermore, the present invention refers to a continuous flow engine providing such sealing element. Additionally, the present invention refers to the use of such sealing element.

Although, continuous flow engines and compressors are very complex and very specialized technical machines the importance for modern technology should not be underestimated. For example, the utilization of continuous flow engines in the field of generating electrical energy is highly important, was highly important in the past and will be highly important in the future. Even taken into account the growing amount of renewable energy being part of the modern energy mix continuous flow engines like gas turbines or steam turbines with the ability to compensate fluctuations resulting from wind power or solar energy represent an essential cornerstone to provide a stable electricity grid.

Herein, the demands on corresponding continuous flow engines are constantly rising and existing systems are to be improved to fulfill the customers demand. While the reliability of corresponding systems constantly increase despite the also increased harsh operating conditions there is still the need to further improve the systems available. Herein, possibilities to improve small components like seals to further adapt them to the specific requirements are equally high important. In recent time also the possibilities to further reduce the downtimes and increase the speed of maintenance become more and more focus of further developments. This results in the requirement to further optimize existing components of continuous flow engines.

These problems are solved by the products and methods as disclosed hereafter and in the claims. Further beneficial embodiments are disclosed in the dependent claims and the further description. These benefits can be used to adapt the corresponding solution to specific needs or to solve further problems.

According to one aspect the present invention refers to a sealing element adapted to be used in a continuous flow engine, preferably a steam turbine, containing at least one sealing part and at least one spring part, wherein the at least one spring part is inseparably connected to the sealing element. Surprisingly, it was noted that corresponding sealing elements not only are easily manufactured but provide a multitude of other benefits. For example, they provide a significantly increased stability and reliability compared to existing spring systems, wherein a spring is, for example, attached to the sealing element on site. The term "inseparably" connected as used herein refers to a connection being not detachable. Naturally, such part can still be removed by, for example, grinding like cutoff grinding. However, in such case the spring part and/or the counter part of the sealing element the spring part is attached to are damaged. Such connection can also be described as integrally formed.

Additionally, the described sealing element greatly reduces the amount of work of the field personal in such case and decreases the chance of minor failures leading to deviations from the expected performance. While such deviations are typically only minor, modern systems to predict and evaluate the status of the continuous flow engine greatly suffer from such unknown factors. The possibility to standardize this component and increase the reliability surprisingly enables the utilization of more precise methods and calculations significantly beyond the expectations attributed to this change. This surprisingly allows to also upgrade existing continuous flow engines to enable them being monitored using modern methods and models to implement additional surveillance and monitoring systems providing a significant benefit for the owner.

Furthermore, it was noted that the inventive design allows to decrease the size of the sealing element. Based on the size requirements and the location of the existing space such saved space also contributes significantly to the overall benefit of the disclosed system.

According to a further aspect the present invention refers to a kit containing a first unit and a second unit, wherein the first unit contains at least one spring part and at least a part of a core part, wherein the second unit contains at least one wall part, wherein the first unit and the second unit are adapted to be connected to provide an inventive sealing element. Manufacturing the sealing element in the form of separate units as those two mentioned above provides further benefits like a simplified manufacturing and utilization of existing manufacturing facilities. Also, it allows to combine different materials in a very simple way and/or to provide security related possibilities. For example, the second unit may contain a security mark or serial number located on the inside and covered by the inseparably connected first unit. In case of failure of the component the sealing element can be cut apart to review the corresponding identifier or mark to, for example, associate the corresponding case to the specific production facility or manufacturer.

According to a further aspect the present invention refers to a method of manufacturing an inventive sealing element, wherein the sealing element contains a core part, wherein the core part is located between the at least one sealing part and the at least one spring part, wherein the method contains the step of manufacturing a unit containing the at least one spring part and at least a part of the core part, more preferred the core part, using additive manufacturing, preferably 3D printing. Surprisingly, it was noted that utilizing existing materials for additive manufacturing are highly efficient to provide the inventive design. Combined with the high flexibility of the additive manufacturing process it allows to easily provide specifically adapted sealing elements for each application. For example, the force required to provide the necessary tension during installation of the sealing element can be tailored according to the specific part. Also, existing continuous flow engines surprisingly do not have to be further adapted as the inventive sealing element can be designed to utilize the existing surrounding of the corresponding engine. Directly printing the correspondingly styled spring parts along with the remaining part furthermore prevents any mix-up being possible when attaching conventional springs to such sealing element. Surprisingly, this provides a significant improvement as, for example, selecting springs being too stiff greatly increase the problems during insertion of the sealing elements. Reducing the required force to the amount really necessary simplifies the work of the field personal and also increase their safety. On the other hand, using too weak springs can result in an incorrect placement of the sealing element.

According to a further aspect the present invention refers to a continuous flow engine containing at least one inventive sealing element. Typically, such continuous flow engines utilize a stream of fluid continuously flowing through the engine to rotate a rotor converting the kinetic energy into electricity. For example, such fluid stream can be generated by means of burning a fuel using a burner in a gas turbine or evaporating a liquid like water in a steam generator. Preferably, the continuous flow engine is a steam turbine. While the sealing elements can be utilized in the number of existing continuous flow engine systems the benefits obtained are especially high for typical steam engines available. Herein, one exemplarily benefit was surprisingly noted for steam engines during maintenance work. Remaining moisture in the streaming fluid path easily results in the component slipping through the fingers of the field personal when trying to install sealing elements in a steam turbine while simultaneously keeping the springs under the required tension. Surprisingly, the inventive sealing element significantly decreases the problem and not only simplifies the work of the field personal, but also increases the reliability of the correctly oriented and mounted springs being essential to fix the sealing element in the correct position. Saving the corresponding tests and checks otherwise required this results in a significantly reduced time required for maintenance and upgrade work.

According to a further aspect the present invention refers to a use of an inventive sealing element to provide an inventive continuous flow engine. Herein, providing such continuous flow engine includes manufacturing a new continuous flow engine as well as upgrading an existing continuous flow engine by implementing an inventive sealing element or servicing an existing continuous flow engine by replacing at least one used sealing element. Typically, it is preferred that at least 50%, more preferred at least 70%, even more preferred all, sealing elements in the streaming fluid path of the continuous flow engine are replaced by the inventive sealing elements during an upgrade. The use of the inventive sealing elements allows to easily improve the properties of an existing steam engine with little effort. Upgrading and especially servicing an existing continuous flow engine benefits greatly from utilizing the inventive sealing elements. The integrated spring parts inseparably connected to the sealing element significantly simplify the process of exchanging the existing sealing element. Surprisingly, the resulting simplification and simultaneously saved time during typical process steps are highly beneficial.

According to a further aspect the present invention refers to a method of providing an inventive continuous flow engine, preferably a steam turbine, containing the step of introducing an inventive sealing element into the continuous flow engine.

To simplify understanding of the present invention it is referred to the detailed description hereafter and the figures attached as well as their description. Herein, the figures are to be understood being not limiting the scope of the present invention, but disclosing preferred embodiments explaining the invention further.
Fig. 1 shows a schematic cross section of an inventive sealing element for a continuous flow engine, wherein the cross section is along the flow direction of the streaming fluid.
Fig. 2 shows a schematic cross section of the inventive sealing element as shown in figure 1, wherein the cross section is perpendicular to the flow direction of the streaming fluid.
Fig. 3 shows a schematic cross section of a comparative sealing element, wherein the cross section is along the flow direction of the streaming fluid.

According to one aspect the present invention refers to a sealing element as specified above.

The inventors further noted that for typical applications the utilization of a labyrinth seal is very beneficial to be used for the sealing part of the sealing element. In further embodiments it is preferred that the at least one sealing part contains at least one labyrinth seal. Especially, for applications like typical steam turbines utilizing a labyrinth seal provides significant benefits.

Furthermore, it was noted that for typical continuous flow engines available it is beneficial to provide the at least one spring part being oriented radially outwards on the sealing element. It was noted, that such arrangement provides a secure fastening for typical types of arrangements within continuous flow engines utilizing existing fastening points. According to further embodiments it is preferred that the at least one spring part is located radially outwards on the sealing element.

The sealing element can be provided as independent functional unit or can be provided as split functional unit. Such split functional unit consists of multiple sealing elements adapted to be introduced into, for example, a continuous flow engine to provide the sealing. In such case the multiple sealing elements are contacting each other. Providing such split functional unit allows to, for example, very easily service a continuous flow engine in typical applications.

Typically, it is preferred that the inventive sealing element or a combination of multiple inventive sealing elements provide a round shape. For example, the overall shape of the sealing element or a combination of multiple sealing elements utilized in a continuous flow engine can provide many shapes like rectangular or polyangular depending on the counterpart of the continuous flow engine the sealing element is attached to. However, it was noted that a round shape like an oval, an elliptical or circular shape, preferably a circular shape, provides especially reliable results for service actions at such engines.

Although, the spring parts can be manufactured separately, wherein specifically optimized materials can be utilized to provide an improved flexibility, it was noted that this is not necessary to provide the required performance. In fact, it was noted that using established and simply manufacturing methods utilizing the same material for the spring part and the part of the sealing element said spring part is attached to provides very good results. This surprising fact allows to signifcantly simplify the manufacturing of the sealing element and avoid problems when attaching said parts to each other. Especially, it was noted that minor deviations in this context may result in the loosening during operation being to be avoided. According to further embodiments the sealing element provides a core part, wherein the core part is located between the at least one sealing part and the at least one spring part, and/or wherein the at least one spring part is consisting of the same material as the core part. Typically, it is preferred that the core part is located between the at least one sealing part and the at least one spring part, and that the at least one spring part is consisting of the same material as the core part.

Typically, it is preferred that the sealing elements contains a core part and a sealing part, wherein the core part and the sealing part are no homogenous material, wherein the core part extends over the whole length of the sealing part. This typically allows to further improve the attachment of a sealing part to the core part. The term "homogenous material" as used in this context preferably refers to a case wherein it cannot be determined where the core part ends and the sealing part begins.

Utilizing the inventive idea disclosed herein it is surprisingly possible to provide the sealing element in a greatly simplified way. For typical embodiments it was noted that certain manufacturing methods are highly beneficial to fulfill the requirements and achieve optimum results. According to further embodiments the core part, the at least one sealing part and the at least one spring part have been manufactured using additive manufacturing, preferably 3D printing, as a whole. This allows to directly realize some optimized design for a specific application on demand. For example, also surprising deviations unknown before based on changes of the original design during prior maintenance can be easily detected during some maintenance and an adapted spare part be provided without delay. Typically, it is preferred that the additive manufacturing utilizes selective laser melting, electron beam melting or binder jetting, more preferred selective laser melting or electron beam melting. These types of additive manufacturing methods have a high potential and possibility of flexible production being beneficially utilized for the present invention.

Additive manufacturing methods are well established despite being relatively new. Especially additive manufacturing methods like 3D printing became topic for industrial applications in the past years and show a big potential to complement or replace existing conventional methods of manufacturing. The additive manufacturing methods are characterized by that a material is applied without some limiting element like some casting mold to build up the product. Examples of especially useful additive manufacturing methods are selective laser melting, electron beam melting and binder jetting. Such methods either build up a product utilizing a powder that typically is removed in a later step like it is done for binder jetting. Very useful for the current application are 3D printing additive manufacturing methods like selective laser melting and electron beam melting building up the product from a powder, wherein the powder is melted layer by layer. By repeating this melting process for each layer of the product the 3 dimensional element is provided.

A for typical applications very beneficial embodiment of the inventive sealing elements provides an arrangement of the at least one sealing part on the inside of the sealing element. Herein, the at least one sealing part is located radially inwards on the sealing element. This allows to provide an uniform sealing of the streaming fluid on the different sides of the sealing element.

Furthermore, it was noted that a specific design of the at least one spring part is very simple to realize with methods like additive manufacturing and still fulfill the requirements demanded by typical applications. According to further embodiments the sealing element provides a core part, wherein the core part is located between the at least one sealing part and the at least one spring part, wherein the at least one spring part provides a first part and a second part, wherein the first part is connecting the core part and the second part, wherein the first part is less flexible than the second part. For example, such restricted flexibility can be realized by utilizing different materials for the first part and the second part. Typically, it is, however, preferred that the first part and second part are consisting of the same material. In such case the restricted flexibility of the first part can be realized by providing a thicker first part and a thinner second part. Additionally or alternatively such reduced flexibility can be realized by providing a pipe structure for the first part and a massive structure for the second part.

It was noted, that providing physical barriers upstream and/or downstream of the spring part surprisingly significantly increases the reliability of the sealing element in typical embodiments. It is assumed that despite corresponding barriers and security measures in typical continuous flow engines such additional physical barrier further improves the protection of the spring part shielding it, for example, from the flow of the streaming fluid through the continuous flow engine. Taking into account the inventive design it is now possible to integrate such physical barrier in the very easy way providing such possibility. Also the inventive design allows to provide such walls that otherwise might hinder placing or attaching a spring for a conventional design. According to further embodiments the sealing element provides at least one wall part, wherein the at least one wall part is located upstream and/or downstream of the spring part, and wherein the at least one wall part is connected to the core part. Typically, it is preferred that the sealing element provides at least two wall parts, wherein at least one wall part is located downstream of the spring part and at least one wall part is located upstream of the spring part. Utilizing the improved inventive design providing low requirements for the space required introducing such additional walls is also possible for existing continuous flow engines without changing dimensions of existing fastenings of such sealing elements. For typical embodiments it is preferred that the second part of the spring part is not directly connected to such wall part. On the contrary, the first part can be directly connected to such wall part resulting in an increased stability and increased stiffening of the first part.

Furthermore, it was noted that reducing possible leakages to the spring part provides addition benefits. While the inventive sealing element suffers less with regard to its reliability from corresponding leakages it was noted that it reduces depositions and simplifies the exchange during maintenance that way. According to further embodiments the sealing elements provides at least one wall part upstream or downstream of the spring part, preferably at least one wall part upstream and at least one wall part downstream of the spring part, wherein the wall part contains a sealing part. Typically, it is preferred that such sealing part is located upstream or downstream of the wall part, even more preferred that such sealing part is located upstream for a wall part located upstream of the spring part or downstream for a wall part located downstream of the spring part. Such types of sealing elements typically provided a significantly improved sealing providing little to no depositions in the spring part area of the sealing element even after long term usage.

Herein, it was noted that for typically available fastenings of existing continuous flow engines a specific variant of the aforementioned specific spring part is often preferred. According to further embodiments the first part of the at least one spring part does not extend over the at least one wall part viewed along the streaming direction of the continuous flow engine. It was noted that this, for example, allows to more easily attach it to typical existing fastening. Although, minor adaptions of the fastenings of existing continuous flow engines are easily done on short notice the surprising possibility to directly attach it to existing fastenings and instantly providing the inventive benefits is very desirable.

Furthermore, it was noted that the design of the second part of the at least one spring part is also beneficially adapted according to the size of the at least one wall part for typical applications. According to further embodiments the at least one spring part provides a non-tensed state, wherein the second part extends beyond that at least wall part in the non-tensed state when viewed along the streaming direction of the continuous flow engine.

Also, it was noted that it was possible to further simplify the installation of the inventive spring part in the continuous flow engine. For typical continuous flow engines designing the sealing elements in the fashion to avoid an extension of the spring part beyond a neighboring wall part surprisingly resulted in a reduced amount of damages observed during installation of the sealing element. According to further embodiments the at least one spring part provides a tensed state, wherein the second part does not extend beyond the at least one wall part in the tensed state when viewed along the streaming direction of the continuous flow engine.

Furthermore, it was noted that a specific type of spring part is especially suited for many types of continuous flow engines. According to further embodiments the at least one spring part provides a tensed state and a non-tensed state, wherein the at least one spring part provides a second part, wherein the at least one spring part provides a movement of the second part when changing from the tensed state to the non-tensed state, and wherein the movement of the second part is directed radially outwards. Analogically, the movement of the second part is directed radially inwards when changing from the non-tensed state to the tensed state.

Also, it was noted that for certain embodiments it is preferred that the spring part provides a first part being designed to ensure that a contact of the first part and a continuous flow engine containing the sealing element is prevented. Surprisingly, it was noted that such design of the sealing element provides an increased long term stability and decreased chance of damages during maintenance. It is assumed that minimizing the contact points decreases the chance of minor damages especially during maintenance and improve the overall value with little effort. According to further embodiments the at least one spring part provides a first part, and wherein the first part is adapted to not contact the continuous flow engine.

The inventive sealing element can be manufactured using different methods. One method applicable, for example, to many cases of mass production includes a separate manufacturing of a unit containing the at least one spring part and at least a part of the core part and a unit containing at least one wall part. It was noted that these elements can be easily combined allowing to easily manufacture the unit containing at least one wall part using conventional means for manufacturing. However, it was also noted that such separate manufacturing process can be beneficially utilized in case both parts are manufactured using additive manufacturing, preferably 3D printing. In this case, for example, it was noted that less precise 3D printing devices can be used to manufacture the unit containing the at least one wall part as it was noted that a slightly reduced precision typically provides no problem for such parts of the component. According to further embodiments the sealing element provides a core part and at least one wall part, wherein the core part is located between the at least one sealing part and the at least one spring part, wherein the at least one wall part is located upstream and/or downstream of the spring part, and wherein the sealing element provides a first unit containing the at least one spring part and the core part, wherein the sealing element provides the second unit containing a wall part of the at least one wall part, wherein the first unit and the second unit have been manufactured separately and have been inseparably connected in the following step.

However, it was also noted that manufacturing the sealing element containing all of the specified parts using additive manufacturing, preferably 3D printing, provides specific benefits. For example, it was noted that highly specific designs can be realized that way and the space requirements can be minimized by an optimized design. The more parts of the sealing element are manufactured in this single step procedure the more optimized the design can be. According to further embodiments it is preferred that the specified parts of the sealing element of the embodiments as disclosed herein are manufactured as a whole using additive manufacturing, preferably 3D printing.

A specific type of sealing element that can be beneficially manufactured as specified above are shaft glands. It was noted that such type of sealing element typically benefits greatly from the inventive modification. According to further embodiments the sealing element is a shaft gland.

Another aspect of the invention refers to a kit containing a first unit and a second unit, wherein the first unit contains at least one spring part and a core part, wherein the second unit contains at least one wall part, wherein the first unit and the second unit are adapted to be connected to provide an inventive sealing element. Preferably, the first unit and second unit are adapted to be inseparably connected. It was noted that it is typically preferred that the first unit and second unit contain counter parts adapted to interact and prevent an incorrect orientation of the units to each other. Introducing such counter parts using additive manufacturing, preferably 3D printing, can be easily realized and allows to significantly reduce the effort required to provide the intended sealing element.

Another aspect of the invention refers to a method of manufacturing an inventive sealing element, wherein the sealing element contains a core part, wherein the core part is located between the at least one sealing part and the at least one spring part, wherein the method contains the step of manufacturing a unit containing the at least one spring part and the core part using additive manufacturing, preferably 3D printing.

It was noted that it is beneficial for typical embodiments to manufacture the unit containing specific elements as a whole using additive manufacturing. Although, it can be advantageous to manufacture the sealing element in the form of several parts it was noted that certain elements of the sealing element are typically more beneficially not to be split up in such way. According to further embodiments the unit manufactured using additive manufacturing, preferably 3D printing, contains the at least one spring part, at least a part of the core part, preferably the core part, and the at least one sealing part.

As already stated above the possibility to manufacture the sealing element using a combination of different manufacturing methods provides certain advantages over manufacturing at least all specified part of sealing element using additive manufacturing. For example, building up the specified unit upon an existing part being manufactured allows to further improve the process and especially easily combine different materials without highly complex additive manufacturing processes. According to further embodiments the unit containing the at least one spring part and the core part are manufactured using additive manufacturing, preferably 3D printing, upon an existing part. Typically, it is preferred that the existing part has been manufactured using conventional means. For example, such existing part can provide the wall part located on one side of the spring part. This allows to mass manufacture such wall part providing protrusions or indentations using conventional means very easily, while the complex form of especially the at least one spring part is realized using additive manufacturing. Also, it allows, for example, to utilize a highly resistant and durable material for such wall part and combining it with the different material more suited for the spring part.

According to another aspect the present invention refers to a continuous flow engine containing at least one inventive sealing element. It was noted that the inventive sealing element can especially beneficially utilized for sealing the streaming fluid through the streaming fluid path of typical continuous flow engines. The combination of highly reliable construction and simple adaptions of design to increase the sealing is surprisingly useful at this location. Furthermore, the downtime connected to maintenance work in this section of the continuous flow engine can be further significantly down using the inventive design. According to further embodiments the continuous flow engine provides a streaming fluid path, wherein the streaming fluid path is adapted to provide a flow of the streaming fluid through the continuous flow engine to rotate a rotor located in the streaming fluid path, wherein the at least one sealing element is located in the streaming fluid path.

According to another aspect the present invention refers to a use of an inventive sealing element to provide an inventive continuous flow engine.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

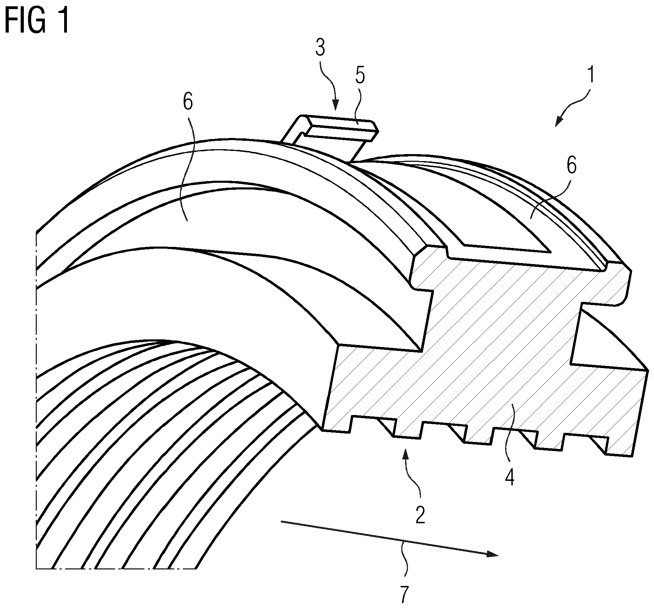

Figure 1 shows a cross section of an inventive sealing element 1 for a continuous flow engine being a steam engine, wherein the cross section is along the flow direction 7 of the streaming fluid. The sealing element 1 being a shaft gland contains a sealing part 2 and multiple spring parts 3 being inseparably connected to the sealing element 1. Not shown is the rotor located radially inwards in a continuous flow engine, wherein the sealing part 2 is adapted to prevent a leakage of streaming fluid between the rotor and the sealing part.

The sealing part 2 is a labyrinth seal being located radially inwards of the sealing element 1, while the spring parts 3 are located radially outwards. The spring parts 3 and the sealing part 2 are connected to a core part 4, wherein the spring parts 3, sealing part 2 and core part 4 have been manufactured using 3D printing and are consisting of the same metal alloy. For example, the sealing part 2 can be manufactured separately and be connected to a core part 4 in a subsequent processing step. However, the example as shown in figure 1 has been manufactured in a single process step resulting in a homogenous material providing the core part 4, the spring parts 3 and the sealing part 2.

Each of the spring parts 3 arranged around the radially outwards side of the sealing element 1 provides a first part and a second part 5. As the first part and second part 5 are consisting of the same material a reduced flexibility of the first part is realized by providing the first part thicker than the second part.

The specific form of the spring parts 3 is not visible in figure 1, as it is covered by one of the wall parts 6 provided upstream and downstream of the spring parts 3. Both wall parts 6 are connected to the core part 4 define a recess, wherein the core part 4 again is connected to the spring parts 3. On the downstream side of the downstream wall part 6 and the upstream side of the upstream wall part 6 the wall parts 6 provide protrusions. These protrusions are adapted to enter a recess of the counter part of the continuous flow engine to limit the possible movement of the sealing element 1. While it is possible to manufacture the sealing element 1 as separate units representing a kit to provide a sealing element 1 especially containing the different wall parts 6 the sealing element 1 as shown in figure 1 has been manufactured as a whole.

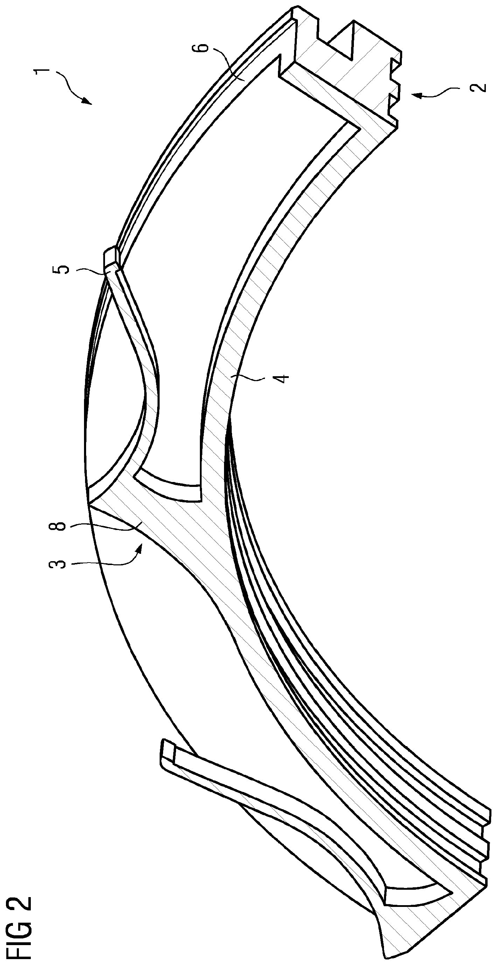

Figure 2 shows a cross section of the inventive sealing element 1 as shown in figure 1, wherein the cross section is perpendicular to the flow direction 7 of the streaming fluid. Figure 2 clearly shows the form of one exemplarily spring part 3. The first part 8 of the spring parts 3 resembles a base structure providing very little flexibility. Said first part 8 does not extend beyond the wall parts 6 if viewed along the flow direction 7 of the streaming fluid of the continuous flow engine. The spring parts 3 are further adapted so that the second part 5 of the spring parts 3 is adapted to also not extend beyond the wall part 6 in a tensed state of the spring parts 3 and to extend beyond the wall part in a non-tensed state. The second part 5 resembles a leaf spring. Figure 2 shows such non-tensed state of the spring parts 3. During the change from the tensed to the non-tensed state the second part 5 of the spring parts 3 move radially outwards.

The part of the second part 5 extending beyond the wall parts 6 is adapted to fix the position of the sealing element 1 inside the continuous flow engine. Herein, the corresponding parts are contacting a counter part of the surrounding continuous flow engine and provide a mechanical fixation. On the other hand, the second part 5 of the spring parts 3 is adapted to not contact the surrounding continuous flow engine.

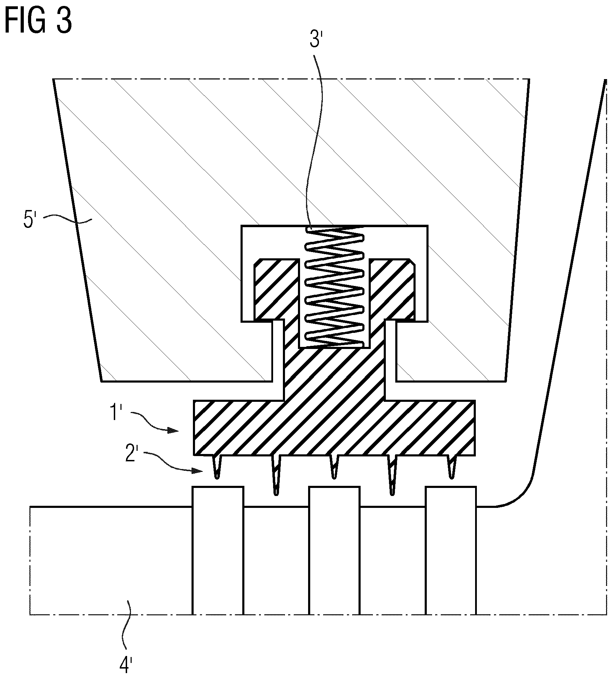

Figure 3 shows a cross section of a comparative sealing element 1', wherein the cross section is along the flow direction of the streaming fluid. Like the inventive embodiment shown in figures 1 and 2 the sealing element 1' provides a sealing part 2' facing a counterpart 4' of the rotor of a continuous flow engine. Contrary to the inventive embodiments no spring part is integrated in the design of the sealing element 1'. The comparative example shows a spring 3 being attached to the sealing element 1' after its manufacturing and tensed before inserting it into the continuous flow engine. Comparable to the inventive example shown in figure 1 and 2 the spring 3' faces a counterpart 5' of the continuous flow engine surrounding the sealing element 1'.

Contrary to the inventive design the comparative example requires more manual interaction and a higher failure risk. Especially, when replacing such sealing element 1' during maintenance it was noted that such spring 3' is more prone to damages resulting in, for example, an incorrect placement requirement a further service action decreasing the maintenance speed. Additionally, it was noted that the inventive design like the one shown in figure 1 and 2 provide an increased long term stability and reliability compared to such comparative example.

The present invention was only described in further detail for explanatory purposes. However, the invention is not to be understood being limited to these embodiments as they represent embodiments providing additional benefits to solve specific problems or fulfilling specific needs. The scope of the protection should be understood to be only limited by the claims attached.

## Claims

1. Sealing element (1) adapted to be used in a continuous flow engine, preferably a steam turbine, containing
at least one sealing part (2) and at least one spring part (3),
wherein the at least one spring part (3) is inseparably connected to the sealing element (1).

2. Sealing element (1) according to claim 1, wherein the at least one sealing part (2) contains at least one labyrinth seal.

3. Sealing element (1) according to any of claims 1 to 2, wherein the at least one spring part (3) is located radially outwards on the sealing element (1).

4. Sealing element (1) according to any of claims 1 to 3, wherein the sealing element (1) provides a core part (4), wherein the core part (4) is located between the at least one sealing part (2) and the at least one spring part (3), and/or wherein the at least one spring part (3) is consisting of the same material as the core part (4).

5. Sealing element (1) according to any of claims 1 to 4, wherein the at least one sealing part (2) is located radially inwards on the sealing element (1).

6. Sealing element (1) according to any of claims 1 to 5, wherein the sealing element (1) provides a core part (4), wherein the core part (4) is located between the at least one sealing part (2) and the at least one spring part (3), wherein the at least one spring part (3) provides a first part (8) and the second part (5),
wherein the first part (8) is connecting the core part (4) and the second part (5),
wherein the first part (8) is less flexible than the second part (5).

7. Sealing element (1) according to claim 6,
wherein the sealing element (1) provides at least one wall part (6),
wherein the at least one wall part (6) is located upstream and/or downstream of the spring part (3), and
wherein the at least one wall part (6) is connected to the core part (4).

8. Sealing element (1) according to any of claims 1 to 7, wherein the at least one spring part (3) provides a tensed state and a non-tensed state,
wherein the at least one spring part (3) provides a second part (5),
wherein the at least one spring part (3) provides a movement of the second part (5) when changing from the tensed state to the non-tensed state, and
wherein the movement is the second part (5) is directed radially outwards.

9. Sealing element (1) according to any of claims 1 to 8, wherein the at least one spring part (3) provides a second part (5), and
wherein the second part (5) is adapted to not contact the continuous flow engine.

10. Sealing element (1) according to any of claims 1 to 9, wherein the sealing element (1) provides a core part (4) and at least one wall part (6),
wherein the core part (4) is located between the at least one sealing part (2) and the at least one spring part (3), wherein the at least one wall part (6) is located upstream and/or downstream of the spring part (3), and
wherein the sealing element (1) provides a first unit containing the at least one spring part (3) and the core part (4),
wherein the sealing element (1) provides the second unit containing a wall part (6) of the at least one wall part (6), wherein the first unit and the second unit have been manufactured separately and have been inseparably connected in the following step.

11. Kit containing a first unit and a second unit,
wherein the first unit contains at least one spring part (3) and at least a part of a core part (4),
wherein the second unit contains at least one wall part (6), wherein the first unit and a second unit are adapted to be connected to provide a sealing element (1) according to any of claims 1 to 10.

12. Method of manufacturing a sealing element (1) according to any of claims 1 to 10, wherein the sealing element (1) contains a core part (4),
wherein the core part (4) is located between the at least one sealing part (2) and the at least one spring part (3),
wherein the method contains the step of manufacturing a unit containing the at least one spring part (3) and at least a part of the core part (4) using additive manufacturing.

13. Method according to claim 12, wherein the unit containing the at least one spring part (3) and the core part (4) are manufactured using additive manufacturing, preferably 3D printing, upon an existing part.

14. Continuous flow engine containing at least one sealing element (1) according to any of claims 1 to 10.

15. Use of a sealing element (1) according to any of claims 1 to 14 to provide a continuous flow engine according to claim 14.
